# EUROPEAN PATENT APPLICATION

(11) **EP 4 387 339 A1**
(43) Date of publication of application: **19.06.2024**
(21) Application number: 22306888.3
(22) Date of filing: 15.12.2022
(51) Int. Cl.: H04W 52/02, H04W 88/06, H04W 88/10, H04W 92/02, H04W 60/00

(54) **CONNECTIVITY MANAGEMENT IN DEVICES COMPLIANT WITH SEVERAL TECHNOLOGIES**

(71) Applicant: THALES DIS FRANCE SAS, 92190 Meudon (FR)
(72) Inventor: BREUER, Volker, 16727 BOETZOW (DE); DEMARTY, Joël, 35520 Montreuil le Gast (FR)
(74) Representative: Thomas, Christine Marie Catherine

(57) **Abstract**

The present invention relates to a method to manage connectivity of a device having a native air interface enabling the device to connect to several networks of different technologies. The device, before entering in power saving mode, determines a technology to be used on the native air interface for subsequent power saving mode period, register at a central node active in relation with wake-up management nodes of the different technologies to centralize all wake-up triggers from the different technologies, said registration comprising an indication of the determined technology. The device, once entered in power saving mode, keeps active only the determined technology on the native air interface, and, for all wake-up triggers, is paged by the network using the determined technology on the native air interface.

## Description

### FIELD OF THE INVENTION

The present invention relates to a method to manage connectivity of a device having a native air interface enabling the device to connect to several networks of different technologies.

The invention also pertains to a central node and to a device implementing said method.

### BACKGROUND OF THE INVENTION

The present mobile communication networks, i.e. LTE networks 4G/5G can be considered as network centric. It means all considerations on communication setup are made by the network.

However a device, interacts with separated networks, i.e. 3GPP, IEEE and WiFi. Such separated networks have separate interfaces which need to be maintained in parallel by the device.

For beyond 5G, the device is considered to be more in the focus. Furthermore major evolutions of the radio communication for beyond 5G (5GB) and 6G are considered to be the incorporation and merge of various communication capabilities besides pure enhancement of the frequency range to THz along with increased massive-MIMO.

In addition power consumption, i.e. the carbon footprint, will become more important. It means a restriction of activities to the minimum needed. Specifically it is known that dual/parallel network connectivity maintenance is power consuming.

Core elements for beyond 5G and 6G are so far:
- 3GPP NTN and TN increased interworking,
- meshed communication, i.e. direct device to device communication in groups,
- 3GPP and non 3GPP radio technologies with increased interworking.

Those elements are listed as core features of 6G and also combinations thereof. However, traditional operators and telco equipment providers still favor a network centric approach, i.e. approach where the network is in charge of maintaining and steering the communication capabilities of the device.

However, no solution for tight interworking of 3GPP and non-3GPP networks such as WLAN/WiFi or IEEE/Mesh and NR or an evolution of NR is known as of per-todays designs. Also, no real-time network communication management is currently known. It is however one of the elements required when maintaining the entire communication steering in the network.

Many of the considered technologies exist today, but there is no-interaction defined, they only co-exist. As of today, the technologies can thus remain separate but does not give optimized behavior in terms of power or cost saving for the device.

Typically, there is no inter-working today between WIFI or Mesh and 3GPP based technologies. Hence, a device being in sleep/power saving listens to both technologies for incoming calls. For any transmission to technologies, which have no inter-working, the traffic to be shared between these technologies cannot be efficiently mastered as there is no inter-working at the network side.

At best, an interface for non-3GPP inter-working is defined but no functionalities or information to be commonly used are currently known.

As the various technologies are not coupled by nature, the device UE only has the related information. The device can handle all technologies especially for technologies being not out of same area, i.e. 3GPP. Hence the UE needs to inform the various technologies on how to master and which is the link to be used for certain purposes, i.e. an inter-connection in the core/IP-domain.

As a starting point today's situation in power saving, i.e. for example during inactivity in the night, can be highlighted. Typically, a device is connected at home most likely via WiFi and 3GPP LTE. For example, the WiFi is used for WhatsApp and other applications in use and 4G/5G for incoming voice calls via IMS. The network is not aware for this dual listening done by the UE. This causes an increased power waist in the device.

Further alternative and advantageous solutions would, accordingly, be desirable in the art.

### SUMMARY OF THE INVENTION

The present invention aims at providing a solution to manage connections to various technologies in a low power consumption way.

The present invention is defined, in its broadest sense, as a method to manage connectivity of a device having a native air interface enabling the device to connect to several networks of different technologies,
said method comprising the following steps, for the device, before entering in power saving mode:
   - determination of a technology to be used on the native air interface for subsequent power saving mode period,
   - registration at a central node active in relation with wake-up management nodes of the different technologies to centralize all wake-up triggers from the different technologies, said registration comprising an indication of the determined technology,
said method further comprising the steps of, for the device:
   - entering in power saving mode,
   - keeping active only the determined technology on the native air interface, said method further comprising the following steps, for the central node, during the power saving mode period,
   - receiving wake-up triggers addressed to the device,
   - forwarding said wake-up trigger to the device using the determined technology on the native air interface.

The method of the invention places the device at the center of the management of the inter-working of several types of networks. The device is involved in decision making related to connectivity or reachability. The invention modifies configuration and messages that are exchanged and impacts the device and the network. The intelligence to decide of the connectivity is within the device.

With the invention, the device receives decision making competence for orchestrating a set of connections in power saving and connected mode.

The device is now enabled to take decisions, which have been so far network entity decisions. The decision of which technology is to be used is now located in the device evaluating all possible communication means in correspondence to the actual foreseen device outgoing communication.

The invention enables to exploit the fact that the device is the only entity, which, at a given point of time, is aware of all air interfaces active in parallel. Hence it could steer the interface to be used because best suited or doing the activation or de-activation accordingly.

The incorporation and connectivity/paging steering by the device itself is not known so far, as today's technologies are separate and network centric. Currently the network decides which 3GPP technology to use but has no interest to steer traffic to non-3GPP technologies, typically WiFi technology. In addition there is no central node managing wake-up on sole air interface which allows multi-technology device to focus its monitoring on a single air interface. Such functionality impacts the basic network and the device functions such as paging behavior and connectivity setup.

Terms "power saving modes" designate any kind of technique supported by each technology and able to be activated at the user equipment and enabling power saving for the user equipment

For 3GPP, this would be for instance, but not limited to, as it could in particular be extended in the future of 5G or for sure in 6G:
- idle mode ;
- eDRX mode ;
- Power Save Mode (PSM) mode ;
- cDRX mode with Wake-Up signal mode.

For WiFi (IEEE 802.11), this would be for instance, but not limited to, as it could also be extended in the future:
- PSM with Power Save-Poll (IEEE 802.11),
- APSD (Automatic Power Save Delivery): Unscheduled APST (U-APSD) and Scheduled APSD (S-APSD);
- PSMP (Power Save Multi-Poll) mode;
- Very High Throughput (VHT) Transmission Opportunity (TXOP) Power Save mode (802.11 ac) and so on and so forth for other technologies...

It is also noted here that a wake-up trigger can be a message, notably a paging message, but also a signal, a timer, an alarm, a specific packet...

It is also here noted that, in 3GPP, a wake-up management node is a paging node to wake up a user equipment from idle or from reduced activity mode, which are power saving modes.

Advantageously, the wake-up trigger comprises an indication of a second technology to be used to answer to the wake-up trigger, and in case said second technology is different from the determined technology, the method further comprises the step, for the device, of activating said second technology on the native air interface.

According to this feature, the device is directly aware of the technology to activate on the native air interface.

Preferably, the wake-up trigger comprising a service indication, the method further comprises the steps, for the device, to:
- determine a best technology regarding the service indication,
- indicate to the central node the best technology for said service using the determined technology on the native air interface,
the method then comprising the step, for the central node, to trigger the best technology to implement the service.

Such a feature is based on the knowledge of the service to be performed with the device. The device, knowing the service uses its intelligence locally to determine a best suited technology to be used for the execution of the service.

The device has an artificial intelligence in the device for paging and connectivity steering, which have been so far network entity decisions. With such a solution, the communication environment, typically for 6G, becomes more device centric, the device being the only instance to manage native air interface combinations of various 3GPP and non-3GPP technologies. This feature applies to connected mode. Algorithms and targets are thus also defined for the connected mode, i.e. considering all communication capabilities as being part of a native air interface. Their usage based on the AI KPIs rules are hence steered from the device.

More precisely, the service indication further comprises one or several parameters among the following:
- data volume,
- QoS values,
- battery power available,
- energy needs.

Such key performance indicators (KPI) for the service enables the intelligence in the device to take them into account to determine the best suited technology. The device derives from those KPIs a connectivity setup for the native air interface combining 3GPP TN and NTN as well as non-3GPP such as meshed communication approaches.

According to this feature, a wake-up trigger like paging/service notification from the registered entity towards the device contains certain key elements on the intended service including KPIs such as expected data volume and QoS parameters which can be Real-Time/Non Real-Time service, tolerable delay by the other side, expected reliability of the link, etc.

The present invention also relates to a central node adapted to implement steps of a method of the invention, said central node being thus active in the management of connectivity of a device having a native air interface enabling the device to connect to several networks of different technologies, said central node being active in relation with wake-up management nodes of the different technologies to centralize all wake-up triggers from the different technologies,
said central node being configured to register the device with an indication of a determined technology to be used on the native air interface for a subsequent power saving mode period,
said central node being further configured to, during the subsequent power saving mode period:
   - receiving wake-up triggers addressed to the device,
   - forwarding said wake-up trigger to the device using the determined technology on the native air interface.

Such a central node enables the method to be implemented on the network side. Said central node in comparison to the existing solutions is responsible for the coordination among different communication systems especially 3GPP and non-3GPP solutions, allowing to maintain the existing systems as they are and just enhancing the network side by this central multi-network communication node. So far nodes are each separated for each telecommunication system. The device indicates to this central node its reachability via a certain technology for expected longer power saving times.

Advantageously, said central node is implemented for one given area and working in parallel to and in collaboration with other central nodes implemented for other areas.

Such multiple central nodes enables to manage the connectivity of devices of the invention on large areas.

Advantageously, the central node stores identifiers of the device for the different technologies.

This enables the central node to be aware of different identifiers used by the different technologies for a same device. The central node is thus able to know which device is concerned by a wake-up trigger, whatever is the technology on which it is received.

Advantageously, one global identifier for the device for its communication with the central node.

This enables the central node to manage the various identifiers from the different communication systems matching to the same device and using out of the set of identifiers the identifier related to the technology on which the device is momentarily active. The central node thus maps all communication requests to the device to its momentary active network identity by maintaining in parallel the storing of several identifiers, that are used by the technologies themselves. To answer the communication request the device can select whether it uses the identity of the technology on which it was informed or whether it activates the communication resources related to the waking up technology and correspondingly uses said identity on said technology.

According to another feature, the central node further comprises an artificial intelligence for wake up adapted to map identifiers to the device and to maintain an active identity whilst connectivity steering/selection itself is done by the device.

The invention also relates to a device having a native air interface to connect to several networks of different technologies,
said device managing its connectivity to the several networks of different technologies, said device being configured to, before entering in power saving mode:
   - determine a technology to be used on the native air interface for subsequent power saving mode period,
   - register at a central node active in relation with wake-up management nodes of the different technologies to centralize all wake-up triggers from the different technologies, said registration comprising an indication of the determined technology,
said device being configured to, after entering in power saving mode, keeping active only the determined technology on the native air interface to receive wake-up triggers using the determined technology on the native air interface.

Such a device monitors its own connectivity behavior by reducing the power consumption necessary to remain reachable. Based on the evaluation of expected power saving period, the device performs by itself a single registration at a central node indicating, which is the sole interface for coming period to monitor.

Advantageously the device has a unique global identifier for its communication with the central node.

Such an unique identifier enables the central node to identify said device and match all its identities whether momentarily active or suspended.

Preferably, the wake-up trigger comprising a service indication, the device further comprises an artificial intelligence for wake-ups and connectivity steering configured to:
- determine a best technology regarding the service indication,
- indicate to the central node the best technology for said service using the determined technology on the native air interface,
the method then comprising the step, for the central node, to trigger the best technology to implement the service.

Then the device, upon receiving any indication on a service to be served, activates its artificial intelligence and evaluates based on said indication, which is a best technology for taking such service.

With such a device indicating preferred technology for said service to wake-up server, the network then directs the service to the indicated interface/technology.

Such an artificial intelligence determines the best suitable technology to be used for any given service, any requested quality of service etc. Expected longer power saving times may be derived by the artificial intelligence in the device based on knowledge. The device can thus learn behavior regarding an expected day time and a moving profile to manage sleeping hours. The network node pages a device based on sole connection knowledge via an indicated technology.

Based on learned knowledge, the device may setup connection to the one or other technology whilst decision may be corrected based on momentary HARQ observations (NACK-rate). Hence new communication channel can be extended or opened up. Said experience when differing from stored experience may impact device behavior at next time at said location.

To the accomplishment of the foregoing and related ends, one or more embodiments comprise the features hereinafter fully described and particularly pointed out in the claims.

### BRIEF DESCRIPTION OF THE DRAWINGS

The following description and the annexed drawings set forth in detail certain illustrative aspects and are indicative of but a few of the various ways in which the principles of the embodiments may be employed. Other advantages and novel features will become apparent from the following detailed description when considered in conjunction with the drawings and the disclosed embodiments are intended to include all such aspects and their equivalents.
- Figure 1 represents the environment in which the problem solved by the invention is encountered;
- Figure 2 shows an implementation of the invention in the environment where a device is susceptible to interface with several technologies;
- Figure 3 shows a time diagram of the method of the invention.

### DETAILED DESCRIPTION OF EMBODIMENTS OF THE INVENTION

For a more complete understanding of the invention, the invention will now be described in detail with reference to the accompanying drawing. The detailed description will illustrate and describe what is considered as a preferred embodiment of the invention. It should of course be understood that various modifications and changes in form or detail could readily be made without departing from the scope of the invention. It is therefore intended that the invention may not be limited to the exact form and detail shown and described herein, nor to anything less than the whole of the invention disclosed herein and as claimed hereinafter. The same elements have been designated with the same references in the different drawings. For clarity, only those elements and steps which are useful to the understanding of the present invention have been shown in the drawings and will be described.

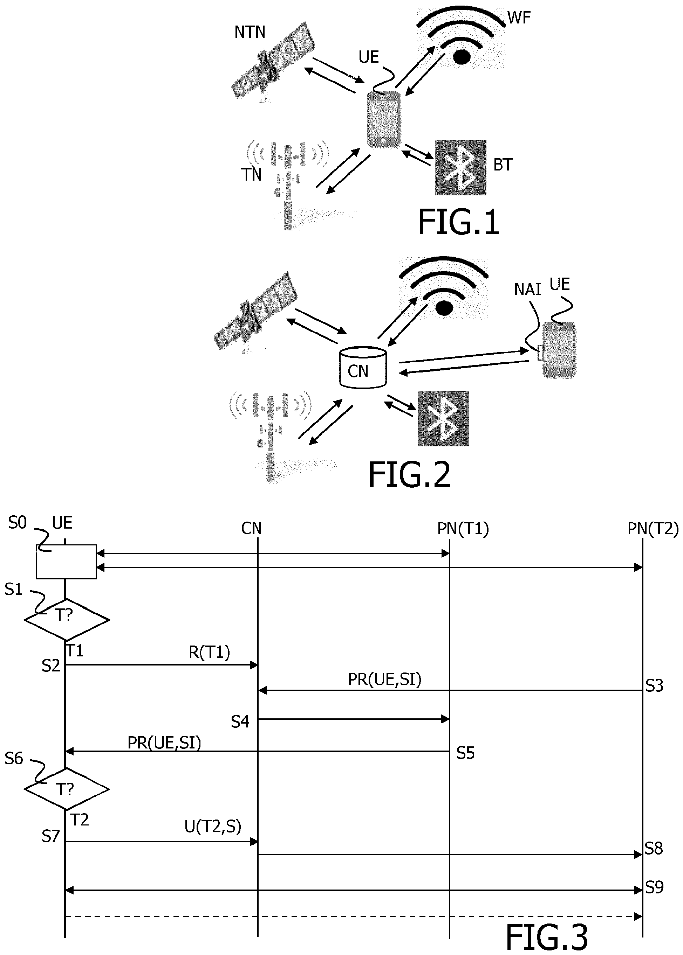

Figure 1 illustrates the environment in which the invention is advantageously implemented. In this environment, a device UE can interact with several air technologies, for example terrestrial mobile communication TN, Wi-Fi WF, non-terrestrial network NTN and BlueTooth BT. The device UE is, in prior art, directly connected to wake-up management nodes of each technology and is responsible for monitoring activity on all these wake-up management nodes.

In 6G and 5G all air interfaces within the device are considered to be more tightly integrated to form a single interface. More precisely, 6G has a corresponding technology field being named "native air interface", i.e. "Integration of various networks and technologies with the user (UE) in the center". The invention uses such a native air interface that has been defined and will continue to be detailed in further releases of 5G and 6G standardization documents.

With the invention, the device indicates directly to the conglomerate of networks that all incoming notifications are to be done solely via one interface. It is most power efficient compared to a situation where the UE has to monitor all technologies. This would reduce carbon emission for the devices. Also networks then only need to interact on a non-real-time basis, i.e. being made aware of the preferred communication path by the device. Hence they steer all communication attempts from network side via said communication mean in real time basis. This means a need for interaction between the various networks, but steered by the device and in real time basis.

Figure 2 schematically shows a device UE of the invention having a native air interface NAI to communicate with a central node CN that is connected to all wake-up management nodes for all available technologies.

Figure 3 is a time diagram of the method of the invention. Preliminary, the device UE is in a high activity phase ACT and has several technologies in use, here T1 and T2. The device UE thus monitors at the same time active services opened with different technologies.

Advantageously, the device UE continuously evaluates its surrounding. Based on the evaluation, the device UE selects the most appropriate and best communication path with respect to power consumption, resource usage and also costs. It may include that the device performs a prior registration for a given technology, i.e. to activate a technology/path which is based on a pay per use basis.

However, such an evaluation can also be effective only shortly previous to an power saving or reduced activity phase, which are both power saving mode. The device lists advantageously configurations applied by the network on demand so that the device can evaluate at a certain point in time which of the network communication means will be best suited for power saving after corresponding request for configuration.

The invention intervenes once the device prepares a low activity phase where no data exchange will be expected. In such an occurrence, the device UE evaluates its environment or uses previous environment evaluation to determine, in a step S1, one of the technology, here T1, to which the activity will be reduced. The device thus then monitors only one active technology on the native air interface while entering and remaining in low activity phase.

An artificial intelligence is thus implemented in the device itself for communication steering in power saving mode, but also in connected mode is ever needed, by evaluating all available communication means and necessities on real-time basis. As a consequence at least for the frequently seen cells the device advantageously maintains an information list. Especially for cells or locations which are frequently visited for longer times i.e. at home or at work, where multiple different technologies are visible the device maintains a list related to the variable technologies and the possibilities thereof for various communication activities.

The low activity phase is typically an power saving mode. This can also be any low activity period triggered when no data exchange is awaited based on a previous knowledge relative to the behavior of the device UE. Such a previous knowledge can be a time schedule, an observed motion or any learned parameter. Based on stored information, the device UE expects to stay a certain amount of time in low/no activity.

In a step S2, the device UE informs the central node CN about its sole reachability on technology T1 R(T1). The device thus indicates its reachability via a certain technology/path. Said path/technology is advantageously periodically monitored by the device. As disclosed below, in case of an incoming notification, it contains the cause and hence the device decides based on its capabilities on which technology to take said incoming call, i.e. a page on the monitored communication on best suited technology.

At this point of time, for incoming calls/service notifications, the device has thus informed the network in advance via which path the device may be momentarily reachable, and for power saving reasons putting the other interfaces in a suspended mode.

Then, during the low activity period, in a step S3, the paging node PN of the technology T2 sends a wake-up trigger PR(UE,SI) for the device UE to the central node CN. The wake-up trigger PR(UE,SI) comprises a service indication SI relative to an incoming awaiting service S. Such a wake-up trigger can be a notification coming from a specific technology for a service being described by a related QoS indicator and other known parameters.

Advantageously the service indication SI comprises key performance indicators for the service among the followings: data amount, QoS class, RT/NRT service etc.

The central node CN then triggers, in a step S4, the sole usable technology T1 to reach the device UE. The wake-up trigger PR(UE,SI) is thus forwarded using technology T1 to the device UE in a step S5.

The device UE has an artificial intelligence, which then enables to choose, in a step S6, a best suited technology to activate regarding the service indicators SI. Here, in the example, the best suited technology is T2.

Based on 6G evolution, a part of the communication steering is now in the device. As the device is the only common "node" in such scenarios being real-time aware of all communication means and its related pros and cons.

In a step S7, the device UE uses its native air interface NAI to send an information U(T2,S) to the central node CN that the technology to be used for the service S is T2. The device UE thus also activate in parallel the technology T2.

Then the central node CN triggers, in a step S8, the technology T2 to implement the service, which is realized in a step S9 as illustrated on figure 3. It is here noted that the device can also directly contact waking-up/session server on the newly activated technology T2 instead of implicating the central node CN. Especially directly reacting on the wake-up technology, even if the notification was forwarded on a different technology, allows the communication setup and maintenance to be proceeded in the normal way. It means that the wake-up initiating system does not even need to be aware that the wake-up was provided on a different technology by stipulating of the central node.

Advantageously, the second data interface with the technology T2 is setup with corresponding network instance and first interface and other wake-up technologies are suspended for time being. Hence any additional incoming service will be notified via said second setup interface. Hence, the device can decide again whether to setup an additional technology or use the currently active one. This leads to an overall benefit cost in terms of power feasibility.

At the end of the service, the data session is thus successfully terminated and the technology is closed and wake-up interface with the first technology T1 is advantageously resumed.

Advantageously, the device can further check whether the best wake-up technology is still the previous one.

With the invention, for incoming data, the device is thus paged/alerted via the indicated communication path. Then, after said wake-up and routing cause clarification, the artificial intelligence in the device evaluates, based on indicated service requisites (data amount, Quality of Service, expected Quality of Experience,..), which is the best communication path for data transfer. It then setups a second path in addition besides. This is also feasible that the device directs the entire traffic including the signaling to be made via said indicated communication interface. The network side first setups said interface as secondary interface in conjunction with the interface reused for wake-up. Once installed and traffic on network side successfully routed there, the interface used for wake-up is suspended. The best wake-up interface may not be best communication interface. Hence the artificial intelligence in the device decides via which interface communication session is supposed to happen.

The data can be routed or indicated on new registration technology setup. It means that the device is informed on a certain technology but decides, based on service type, to resume said service on a different network interface, which may also be different than the wake-up initiating interface. Hence traffic is rerouted in the network accordingly. The invention enables to leave the decision making to the device after a wake-up on which air interface connection will be used for said service. Based on such information, the device can decide which air interface to use and whether registration for a pay as you use technology may make sense.

According to an optional feature, after a data transfer the device indicates to the central node that the suspended wake-up interface is resumed as wake-up interface when the device enters power saving state on said master link and terminates connection. Advantageously, the network informs the relevant network entity that it has become again the sole contact interface for said device.

The above example is for simplicity reduced to one second air interface out of all supported air interfaces to be used for transport. Said drawing shall in no sense be limiting to the method, which allows for multiple interfaces to be sued and activated in parallel for the transport related to various services.

Power savings as proposed by the invention are in the focus of making a future evolved technology more green than today. In parallel to the invention, the network may provide eDRx and other power reducing features up to a maximum as requested by the device or as supported by the network, i.e. eDRX delaying traffic in a network also causes in the network special handling for long delay data delivery and storing accordingly. In the device only the momentarily configuration of the network is seen, i.e. in 3GPP the actual DRX, whether eDRX or other power saving features would be supported and to what extend is up to the network.

In the above detailed description, reference is made to the accompanying drawings that show, by way of illustration, specific embodiments in which the invention may be practiced. These embodiments are described in sufficient detail to enable those skilled in the art to practice the invention. The above detailed description is, therefore, not to be taken in a limiting sense, and the scope of the present invention is defined only by the appended claims, appropriately interpreted.

## Claims

1. Method to manage connectivity of a device having a native air interface enabling the device to connect to several networks of different technologies,
said method comprising the following steps, for the device, before entering in power saving mode:
- determination of a technology to be used on the native air interface for subsequent power saving mode period,
- registration at a central node active in relation with wake-up management nodes of the different technologies to centralize all wake-up triggers from the different technologies, said registration comprising an indication of the determined technology,
said method further comprising the steps of, for the device:
- entering in power saving mode,
- keeping active only the determined technology on the native air interface,
said method further comprising the following steps, for the central node, during the power saving mode period,
- receiving wake-up triggers addressed to the device,
- forwarding said wake-up trigger to the device using the determined technology on the native air interface.

2. Method according to claim 1, wherein the wake-up trigger comprises an indication of a second technology to be used to answer to the wake-up trigger, and in case said second technology is different from the determined technology, the method further comprises the step, for the device, of activating said second technology on the native air interface.

3. Method according to one of claims 1 and 2, wherein, the wake-up trigger comprising a service indication, the method further comprises the steps, for the device, to:
- determine a best technology regarding the service indication,
- indicate to the central node the best technology for said service using the determined technology on the native air interface,
the method then comprising the step, for the central node, to trigger the best technology to implement the service.

4. Method according to claim 3, wherein the service indication further comprises one or several parameters among the following:
- data volume,
- QoS values,
- battery power available,
- energy needs.

5. Central node configured to implement steps of a method of one of claims 1 to 4, said central node being thus active in the management of connectivity of a device having a native air interface enabling the device to connect to several networks of different technologies, said central node being active in relation with wake-up management nodes of the different technologies to centralize all wake-up triggers from the different technologies,
said central node being configured to register the device with an indication of a determined technology to be used on the native air interface for a subsequent power saving mode period,
said central node being further configured to, during the subsequent power saving mode period:
- receiving wake-up triggers addressed to the device,
- forwarding said wake-up trigger to the device using the determined technology on the native air interface.

6. Central node according to claim 5, said central node being implemented for one given area and working in parallel to and in collaboration with other central nodes implemented for other areas.

7. Central node according to at least one of claims 5 and 6, storing identifiers of the device for the different technologies.

8. Central node according to at least one of claims 5 to 7, defining one global identifier for the device for its communication with the central node.

9. Central node according to at least one of claims 5 to 8, comprising an artificial intelligence for wake-up adapted to map identifiers to the device and to maintain an active identity whilst connectivity steering/selection itself is done by the device.

10. Central node according to at least one of claims 5 to 8, comprising an artificial intelligence for performing the connectivity steering by selecting the corresponding technology.

11. Device having a native air interface to connect to several networks of different technologies, said device being configured to implement steps of a method of one of claims 1 to 4,
said device managing its connectivity to the several networks of different technologies, said device being configured to, before entering in power saving mode:
- determine a technology to be used on the native air interface for subsequent power saving mode period,
- register at a central node active in relation with wake-up management nodes of the different technologies to centralize all wake-up triggers from the different technologies, said registration comprising an indication of the determined technology,
said device being configured to, after entering in power saving mode, keeping active only the determined technology on the native air interface to receive wake-up triggers using the determined technology on the native air interface.

12. Device according to claim 11, wherein the wake-up trigger comprising an indication of a second technology to be used to answer to the wake-up trigger, and in case said second technology is different from the determined technology, the device is further configured to activate said second technology on the native air interface.

13. Device according to at least one of claims 11 and 12, wherein, the wake-up trigger comprising a service indication, the device further comprises an artificial intelligence for wake-up and connectivity steering configured to:
- determine a best technology regarding the service indication,
- indicate to the central node the best technology for said service using the determined technology on the native air interface,
the method then comprising the step, for the central node, to trigger the best technology to implement the service.

14. Device according to at least one of claims 11 to 13, having a unique global identifier for its communication with the central node.
